# EUROPÄISCHE PATENTANMELDUNG

(11) **EP 1 355 286 A2**
(43) Veröffentlichungstag der Anmeldung: **22.10.2003**
(21) Anmeldenummer: 03007630.1
(22) Anmeldetag: 03.04.2003
(51) Int. Cl.: G09B 9/00

(54) **Autonomes an Bord und im Fluge generiertes Waffensystemsimulationssystem zur Darstellung virtueller Szenarien**

(30) Priorität: 15.04.2002 DE 10216599
(71) Anmelder: EADS Deutschland GmbH, 85521 Ottobrunn (DE)
(72) Erfinder: Bartoldus, Klaus, 81925 München (DE); Hartung, Dietrich, 80639 München (DE); Eibl, Herbert, 82008 Unterhaching (DE); Böhm, Jürgen, 82008 Unterhaching (DE); Grieb, Martin, 85635 Höhenkirchen (DE); Pongratz, Hans, 82024 Taufkirchen (DE)

(57) **Zusammenfassung**

Autonomes an Bord und im Fluge generiertes Waffensystem-Simulationssystem zur Darstellung virtueller Szenarien mit einer Simulation für eigene Waffensysteme und computergenerierten Boden-Luft- und Luft-Luft-Bedrohungen, wobei das Waffensystem-Simulationssystem (WaSiF, 1) ein Echtzeit-Luftkampftraining an Bord von Kampfflugzeugen ermöglicht, das mit und/oder gegen computer-generierten Kräften ausgeführt wird und dass die Realisierung durch die Einbindung der Besatzung in virtuelle Szenarien mit virtuellen Partnern, Zielen und Gegnem in der gewohnten Cockpit- und Anzeigeumgebung erfolgt.

## Beschreibung

Die Erfindung betrifft ein autonomes an Bord und im Fluge generiertes Waffensystem-Simulationssystem zur Darstellung virtueller Szenarien gemäß dem Oberbegriff des Patentanspruchs 1.

Waffensystemsimulationssysteme sind in boden-gebundenen Full-Mission-Simulatoren bekannt. Alle Hersteller dieser Full-Mission-Simulatoren sind in der Nachbildung der Realität weit vorangeschritten. Der Nachteil dieser bekannten Simulations-Systeme liegt darin, daß Auswirkungen auf und Anforderungen an eine Besatzung beim hochdynamischen fliegerischen Einsatz (zunächst bei Luftverteidigungaufgaben, später bei allen Einsatzarten des modernen Luftkriegs) nur sehr eingeschränkt darstellbar sind, da ein Boden-Simulator nicht das wirkliche Fliegen ersetzen und nicht die Anforderungen an effizientes Training beim wirklichen Fliegen erfüllen kann.

Der Erfindung liegt die Aufgabe zugrunde, ein autonomes an Bord und im Fluge generiertes Waffensystem-Simulationssystem zur Darstellung virtueller Szenarien zu schaffen.

Diese Aufgabe wird erfindungsgemäß durch die Merkmale des Patentanspruchs 1 gelöst. Weiterbildungen der Erfindung sind in den Unteransprüchen angegeben.

Die erfindungsgemäße Lösung beruht darauf, dass sie ein virtuelles Echtzeit-Luftkampftraining an Bord von Kampfflugzeugen ermöglicht, das gegen oder mit computer-generierten Kräften ausgeführt wird. Die Realisierung erfolgt erfindungsgemäß durch die Einbindung der Besatzung in virtuelle Luftverteidigungs-Szenare mit virtuellen eigenen Kräften oder Simulations-Teilnehmern, Zielen und/oder Gegnern in der gewohnten Cockpit- und Anzeige-Umgebung. Die virtuellen eigenen Kräfte, Ziele und Gegner, denen ein realistisches Verhalten zu eigen ist, können mit an Bord simulierten und stimulierten Sensoren und Waffen erfaßt und bekämpft werden.

Die erfindungsgemäße Lösung ermöglicht vorteilhaft eine effizientere Ausbildung und ein effizienteres Training aller Luftverteidigungsaufgaben durch eine jederzeit an Bord verfügbare autonome Ausbildung in luftgestützen Szenarien, beginnend bei der Limited Combat Ready (LCR)-Ausbildung im Einsatzverband bis hin zur KRK-Ausbildung im Einsatz vor Ort. Die Ausbildung kann vorteilhaft in an Bord simulierten Szenarien gegen multiple virtuelle Gegner mit Luft-Luft- und Boden-Luft-Bedrohungen, mit simulierten Waffen und deren Waffenwirkungen, mit elektronischen Schutz- und Gegenmaßnahmen in der an Bord simulierten und stimulierten operationellen Sensorumgebung und mit einer möglichen Vernetzung mit anderen Trägem für die Waffensystem-Simulation im Fluge - nachstehend als Waffensystem-Simulationssystem oder "WaSiF" bezeichnet - in der Luft und/oder am Boden erreicht werden.

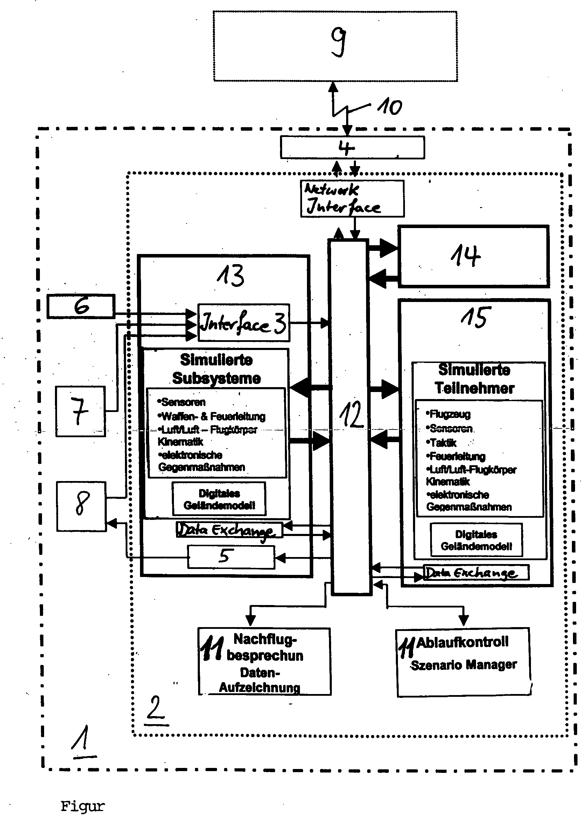

Anhand der Zeichnung wird nachstehend ein Ausführungsbeispiel der Erfindung näher erläutert. Die Figur zeigt als Blockschaltbild ein erfindungsgemäßes Waffensystem-Simulationssystem oder eine erfindungsgemäße WaSiF.

Das Waffensystem-Simulationssystem oder die WaSif 1 umfasst einen bordseitig in die existierende Avionik-Umgebung integrierten Computer oder eine bordseitige Recheneinheit 2, der bzw. die über eine Schnittstelle 3 und ein Luft-Luft/Luft-Boden/Boden-Luft-Sende/Empfangssystem 4 Eingabedaten erhält und über eine Schnittstelle 5 bordseitig Informationen für die Besatzung und über ein Shared Memory 12 Informationen an ein Nachflugbesprechungssystem 11 und an eine Ablaufkontrolle 11 ausgibt.

Die Eingabedaten umfassen Flugzeug-Echtzeitdaten 6 des Flugzeugs, Bedienkommandos 7 für die WaSiF, Kontrollfunktionen 11 für die WaSiF aus der Ablaufkontrolle 11 sowie über das Luft-Luft-/Luft-Boden-/Boden-Luft-Sende/Empfangssystem 4 erhaltenen Daten von anderen fliegenden WaSiF-Teilnehmem 9 oder Simulations-Teilnehmern, wie z.B. Gegner, Partner oder Bedrohungen, oder von bodengebundenen Simulatoren und Einrichtungen.

Die Ausgabedaten werden an Bord auf dem bordeigenen Display- und Kontrollsystem 8 ausgegeben und über das Luft-Luft-/Luft-Boden-/ Boden-Luft-Sende/Empfangssystem 4 an die anderen fliegenden WaSiF-Teilnehmer 9 oder bodengebundene Simulatoren und Einrichtungen gesendet.

Für die Kommunikation mit den anderen fliegenden WaSiF-Teilnehmem 9 oder bodengebundenen Simulatoren und Einrichtungen dient eine drahtlose Hochgeschwindigkeits-Datenverbindung 10.

Weitere Ausgabedaten werden vom Computer 2 in verschiedenen Datenspeichem 11, aufbereitet für eine nachträgliche Auswertung der Mission, abgelegt. Dabei handelt es sich um Flug- und Meßdaten und Daten eines Szenario-Managers.

Der Computer 2 ist mit seiner Hardware und Software so ausgerüstet, daß drei Hauptprogramme zur Simulation des eigenen Waffensystems 13, der computergenerierten Luft-Luft-Bedrohung 15 und der computergenerierten Boden-Luft-Bedrohung 14 in ihm parallel ablaufen, wozu er mit einem Shared Memory 12 ausgerüstet ist.

Mit dem vorangehend beschriebenen bordeigenen System können die nachstehend aufgelisteten Funktionen ausgeführt werden:
- die Simulation der Arbeitsweise, Steuerung und Wirkung von bordeigener und gegnerischer, realer und simulierter Sensorik,
- die Simulation von virtuellen Gegnern mit anpaßbarem taktischen Verhalten und wählbarer Topologie,
- die Generierung von Übungs- und Einsatszenarien mit der Einbindung aller WaSiF-Träger,
- die Simulation der Charakteristika eigener und gegnerischer Waffen, Waffenwirkung und Waffeneffektivität,
- die Simulation der gegnerischen Waffeneinsatzlogik für Einsätze außerhalb und innerhalb des Sichtbereichs,
- die Simulation von Wechselwirkungen bei Emissionen und Störungen auf alle eigenen und gegnerischen realen und simulierten Bord- und Bodensysteme,
- die Simulation der Bedrohung durch Bodensysteme und
- die Simulation eigener und gegnerischer Überlebensfähikeit.

Weiterhin besitzt das bordeigene System ein automatisches Datenaufzeichnungssystem mit Szenario-Eingabe- und -Wiedergabe-Möglichkeiten für die jeweilige, Mission und der Möglichkeit zur Nachflugbesprechung der Ausbildungs- und Trainingsmission.

Die Luft-Luft-/Luft-Boden-/Boden-Luft-Vernetzung des WaSiF-Flugzeugs mit bodengestützten Simulatoren und Einrichtungen ermöglicht Ausbildung und Training unter Berücksichtigung des Air Command und Control Systems (ACCS), dem neuen C²-System der NATO.

Die Mensch-Maschine-Schnittstelle des bordeigenen Systems kann optional ein Helmet Mounted Display (HMD) sein, um virtuelle Ziele im Sichtbereich der Besatzung darstellen zu können.

Das bordeigene System wird ergänzt durch die Einbindung von Bodeneinrichtungen zur Durchführung von Missionsvorbereitungen und Missionsnachbesprechungen, die über die voranstehend genannten Eingabe- und Ausgabeeinheiten mit dem bordeigenen System kommunizieren können.

Der Computer 2 ist mit einer weiteren - nicht in der Fig. gezeigtem - Hauptprogramm ausrüstbar, das entweder über die bordeigenen Systeme 6 oder über eine Sender/Empfänger-Einrichtung oder das Luft-Luft-/Luft-Boden-/ Boden-Luft-Sende/Empfangssystem 4 den Simulationsraum auf eindringende und nicht an der Simulation beteiligte fliegende Systeme beobachtet, und beim Eintreten eines derartigen Ereignisses die Simulation mit der Ausgabe einer entsprechenden Wammeldung an die Besatzung selbsttätig abbricht.

### Bezugszeichenliste

- 1: WaSiF
- 2: Computer
- 3: Schnittstelle
- 4: Sender/Empfänger oder Luft-Luft-/Luft-Boden-/Boden-Luft-Sende/Empfangssystem
- 5: Schnittstelle
- 6: Flugzeug-Echtzeitdaten
- 7: Bedienkommandos
- 8: Bordanzeige- und Kontrollsystem
- 9: Fliegende/bodengebundene vemetzte WaSiF-Teilnehmer
- 10: Hochgeschwindigkeitsdatenverbindung
- 11: Datenspeicher, Nachflugbesprechung, Ablaufkontrolle
- 12: Shared Memory
- 13: Simulation des eigenen Waffensystems
- 14: Simulation von computergenerierten Boden-Luft-Bedrohungen
- 15: Simulation von computergenerierten Luft-Luft-Bedrohungen

## Patentansprüche

1. Autonomes an Bord und im Fluge generiertes Waffensystem-Simulationssystem zur Darstellung virtueller Szenarien mit einer Simulation für eigene Waffensysteme und computergenerierten Boden-Luft- und Luft-Luft-Bedrohungen,
**dadurch gekennzeichnet, dass**
das Waffensystem-Simulationssystem (WaSiF, 1) ein Echtzeit-Luftkampftraining an Bord von Kampfflugzeugen ermöglicht, das mit und/oder gegen computer-generierten Kräften ausgeführt wird und dass die Realisierung durch die Einbindung der Besatzung in virtuelle Szenarien mit virtuellen Partnern, Zielen und Gegnern in der gewohnten Cockpit- und Anzeigeumgebung erfolgt.

2. Autonomes an Bord und im Fluge generiertes Waffensystemsimula-tionssystem zur Darstellung virtueller Szenarien nach Patentanspruch 1, **dadurch gekennzeichnet, dass** über ein Luft-Luft-/Luft-Boden-/Boden-Luft-Sende/Empfangssystem (4) Eingabedaten dem Waffensystem-Simulationssystem (WaSiF, 1) zugeführt werden und über eine Schnittstelle (5) bordseitig Informationen für die Besatzung und über ein Shared Memory (12) Informationen an ein Nachflugbesprechungssystem (11) und an eine Ablaufkontrolle (11) ausgegeben werden.

3. Autonomes an Bord und im Fluge generiertes Waffensystemsimula-tionssystem zur Darstellung virtueller Szenarien nach Patent-anspruch 1, **dadurch gekennzeichnet, dass** die WaSiF (1) durch Bodeneinrichtungen ergänzt ist, mit denen eine Missionsvorbereitung, -überwachung und -auswertung möglich ist.

4. Autonomes an Bord und im Fluge generiertes Waffensystemsimulationssystem zur Darstellung virtueller Szenarien nach einem der Patentansprüche 1 bis 3, **dadurch gekennzeichnet, dass** die WaSiF (1) ein Hauptprogramm aufweist, das den Simulationsraum auf eindringende und nicht an der Simulation beteiligte fliegende Systeme beobachtet, und beim Eintreten eines derartigen Ereignisses die Simulation mit der Ausgabe einer entsprechenden Wammeldung an die Besatzung selbsttätig abbricht.

5. Autonomes an Bord und im Fluge generiertes Waffensystemsimula-tionssystem zur Darstellung virtueller Szenarien nach einem der Patentansprüche 1 bis 3, **dadurch gekennzeichnet, dass** die bordeigene Ausgabe von Daten der WaSiF (1) zum Teil auf einem Helmet Mounted Display (HMD) erfolgt.
